# EUROPEAN PATENT APPLICATION

(11) **EP 1 400 958 A2**
(43) Date of publication of application: **24.03.2004**
(21) Application number: 03020966.2
(22) Date of filing: 16.09.2003
(51) Int. Cl.: G11B 7/00

(54) **Hard disk drive having hole cover for blocking electromagnetic wave**

(30) Priority: 16.09.2002 KR 2002056231
(71) Applicant: SAMSUNG ELECTRONICS CO. LTD., Suwon-city, Kyungki-do (KR)
(72) Inventor: Cho, Jae-deog, Suwon-si Gyeonggi-do (KR); Lee, Chul-wo, Bundang-gu Seongnam-si Gyeonggi-do (KR); Kim, Kwang-kyu, Kwonseon-gu Suwon-si Gyeonggi-do (KR)
(74) Representative: Grünecker, Kinkeldey, Stockmair & Schwanhäusser Anwaltssozietät

(57) **Abstract**

A hard disk drive includes a housing having a base plate and a cover plate. A spindle motor is installed on the base plate. A disk is installed on the spindle motor to store data. An actuator has a magnetic head to record or reproduce data with respect to the disk and is installed on the base plate capable of pivoting by a voice coil motor. A printed circuit board is installed on a bottom surface of the base plate. A through hole where servo track information is recorded on a recording surface of the disk is formed in the base plate, and a hole cover made of a metal plate exhibiting an electric conductivity and covering the through hole is attached to the bottom surface of the base plate to block an electromagnetic wave generated by the printed circuit board from being transferred to the inside of the housing.

## Description

### BACKGROUND OF THE INVENTION

This application claims the priority of Korean Patent Application No. 2002-56231 filed 16 September 2002 in the Korean Intellectual Property Office, the disclosure of which is incorporated herein in its entirety by reference.

### 1. Field of the Invention

The present invention relates to a hard disk drive, and more particularly, to a hard disk drive which can effectively prevent a magnetic head installed on an actuator, and a preamplifier, from being damaged by an electromagnetic wave generated by a printed circuit board.

### 2. Description of the Related Art

Hard disk drives (HDDs) are one of auxiliary memory devices for a computer to read or record data from or on a disk using a magnetic head.

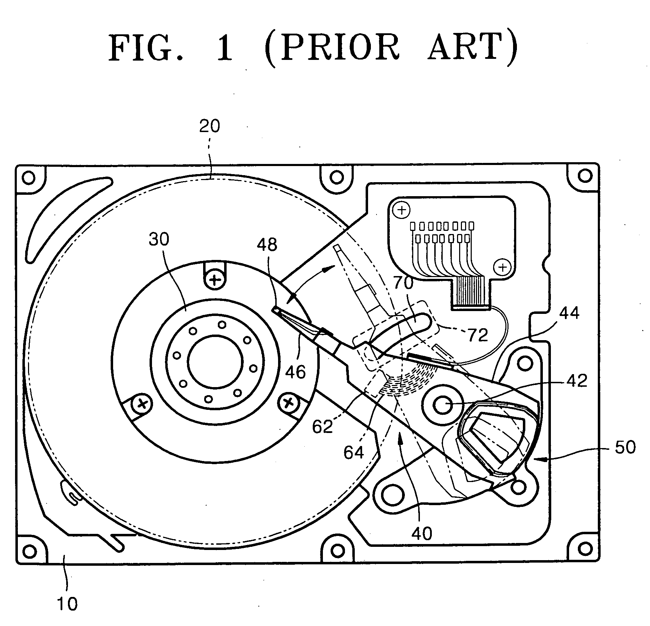

FIG. 1 is a plan view illustrating a conventional hard disk drive. Referring to the drawing, a conventional hard disk drive includes a magnetic disk (hard disk) 20 which is a recording medium where data is recorded, and a magnetic head (not shown) which records data on a recording surface of the disk 20 or reproduces the recorded data. The disk 20 is rotated by a spindle motor 30 installed on a base plate 10. Servo track information indicating the position of information to be recorded is recorded on hundreds of thousands of tracks formed on the recording surface along the circumference of the disk 20. An actuator 40 is installed on the base plate 10 capable of pivoting. The magnetic head is mounted on a slider 48 installed at one end portion of the actuator 40. The actuator 40 includes an arm 44 pivoting around a pivot shaft 42 by a voice coil motor 50 and a suspension 44 coupled to one end portion of the arm 44 and supporting the slider 48 having the magnetic head to be elastically biased toward the recording surface of the disk 20.

During which the power of the hard disk drive is turned off, the slider 48 is placed on the surface of the disk 20 by an elastic force of the suspension 46. When the power is turned on and the disk 20 begins to rotate, lift by air pressure is generated and accordingly the slider 48 is lifted to a predetermined height. The slider 48 in a lifted state is moved toward the recording surface of the disk 20 as the actuator 40 pivots. As a result, the magnetic head mounted on the slider 48 traces a particular track on the recording surface of the disk 20 and records and reproduces data.

In the meantime, a through hole 70 in which a push-pin (not shown) used in recording servo track information on the recording surface provided on the bottom surface of the disk 20 is inserted is formed in the base plate 10. After the servo track information is completely recorded, a printed circuit board (PCB) (not shown) on which a plurality of chips, such as an LSI (large scale integrated circuit), are mounted is installed on the bottom surface of the base plate 10.

However, in the conventional hard disk drive having the above structure, an electromagnetic wave having a predetermined frequency is generated by the LSI mounted on the PCB located at the lower portion of the base plate 10. The electromagnetic wave is transferred over the base plate 10 via the through hole 70. The electromagnetic wave transferred over the base plate 10 affects the magnetic head installed at the actuator 40 and an FPCB (flexible printed circuit board) 64 and a preamplifier 62 to apply a current signal to the magnetic head and to amplify a reproduction signal from the magnetic head, thus generating noise in the reproduction signal.

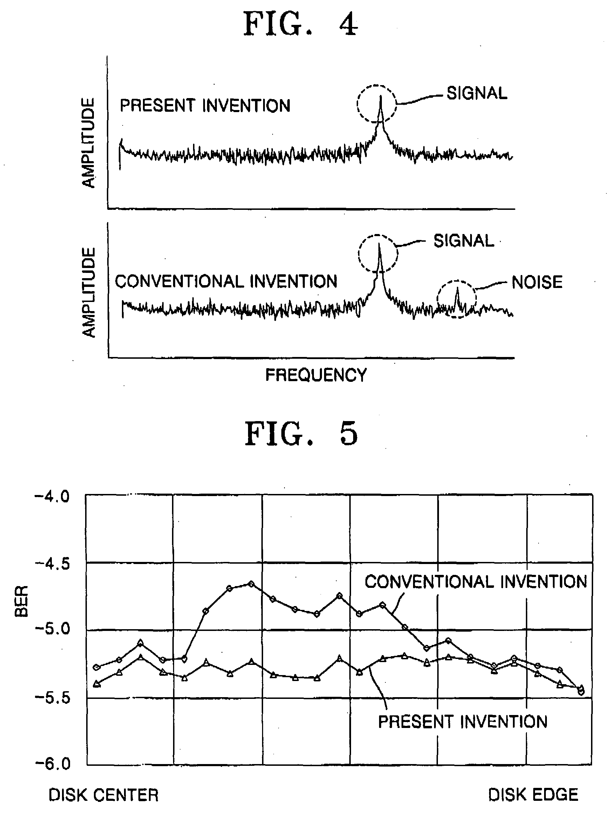

As shown in FIG. 4, in the conventional hard disk drive, relatively great noise is generated in a frequency area different from that of the reproduction signal due to the above-described reasons. Accordingly, a bit error rate (BER) due to noise increases in the reproduced data. In particular, as shown in FIG. 5, the BER of a reproduction signal appears high when the magnetic head is disposed in the middle portion between the central portion and the edge portion of the disk 20. This is because, at this position, the magnetic head, the preamplifier 62, and the FPCB 64 are closest to the through hole 70.

In the meantime, to prevent the disk 20 and the magnetic head from contaminated by dust or moisture introduced from the outside via the through hole 70, a hole cover 72 covering the through hole 70 is attached to the bottom surface of the base plate 10. However, since the conventional hole cover 72 is made of a plastic plate coated with metal powder such as aluminum, the formation thereof is not dense so that the hole cover 72 cannot block an electromagnetic wave passing through the same. Also, since current is difficult to flow the conventional hole cover 72, an effect of attenuation of an electromagnetic wave due to eddy current loss cannot be obtained. Thus, the hole cover 72 provided in the conventional hard disk drive cannot block the electromagnetic wave generated by the LSI of the PCB and transferred over the base plate 10 via the through hole 70.

### SUMMARY OF THE INVENTION

To solve the above and other problems, the present invention provides a hard disk drive having a hole cover for preventing an electromagnetic wave generated by a PCB from being transferred toward a magnetic head and a preamplifier installed on an actuator via a through hole formed in a base plate.

According to an aspect of the present invention, a hard disk drive comprises a housing having a base plate and a cover plate, a spindle motor installed on the base plate, a disk installed on the spindle motor to store data, an actuator having a magnetic head to record or reproduce data with respect to the disk and installed on the base plate capable of pivoting by a voice coil motor, and a printed circuit board installed on a bottom surface of the base plate, wherein a through hole where servo track information is recorded on a recording surface of the disk is formed in the base plate, and a hole cover made of a metal plate exhibiting an electric conductivity and covering the through hole is attached to the bottom surface of the base plate to block an electromagnetic wave generated by the printed circuit board from being transferred to the inside of the housing.

Eddy current is generated in the hole cover by the electromagnetic wave generated by the printed circuit board, and the electromagnetic wave is reduced by energy loss due to the eddy current.

The hole cover is made of an aluminum plate. The hole cover is attached to the bottom surface of the base plate using a predetermined adhesive. The hole cover is attached to the bottom surface of the base plate using an adhesive tape covering the hole cover.

### BRIEF DESCRIPTION OF THE DRAWINGS

The above features of the present invention will become more apparent by describing in detail preferred embodiments thereof with reference to the attached drawings in which:
FIG. 1 is a plan view illustrating a conventional hard disk drive;
FIG. 2 is an exploded perspective view illustrating a hard disk drive having a hole cover according to the present invention;
FIG. 3 is a vertical sectional view of the hard disk drive of FIG. 2;
FIG. 4 is a graph showing the amplitudes of a reproduction signal and noise in the hard disk drive according to the present invention in comparison with those of the conventional technology; and
FIG. 5 is a graph showing a BER of a reproduction signal according to the position of the magnetic head in the hard disk drive according to the present invention in comparison with the conventional technology.

### DETAILED DESCRIPTION OF THE INVENTION

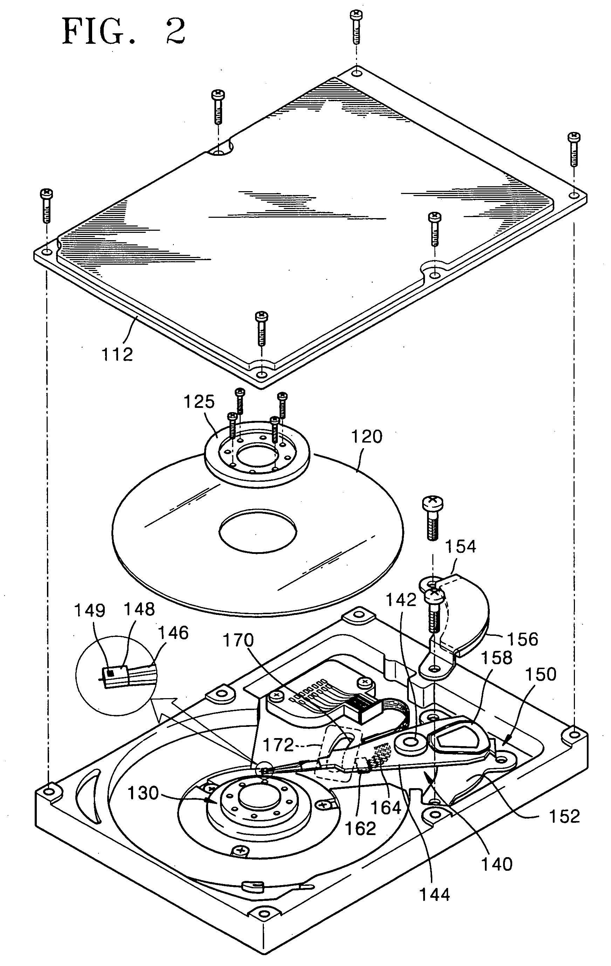

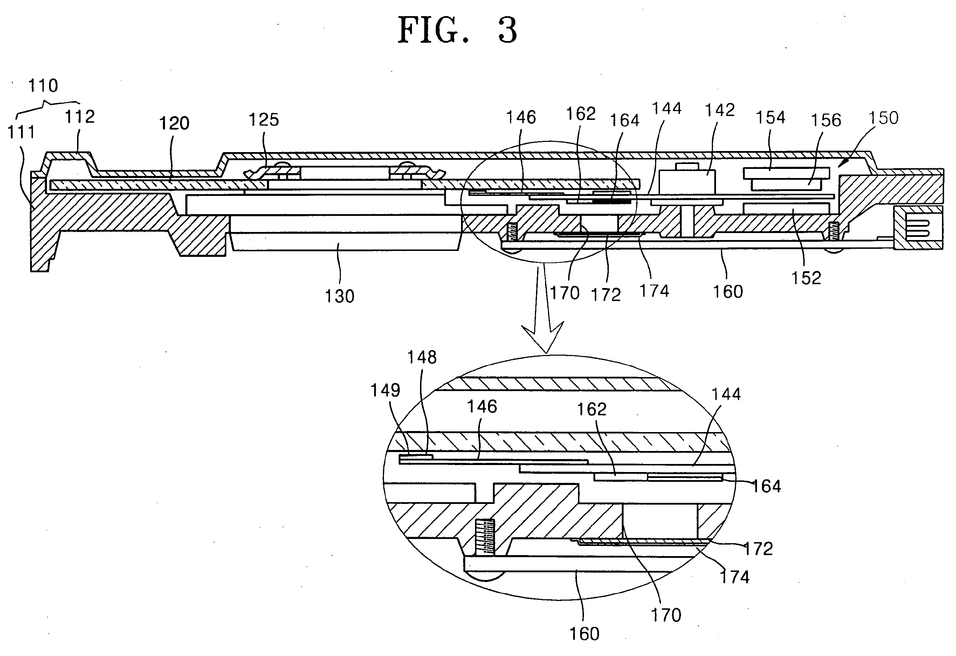

Referring to FIGS. 2 and 3, a hard disk drive according to the present invention includes a housing 110 in which a magnetic disk 120, a spindle motor 130, and an actuator 140 having a magnetic head 149, and a voice coil motor 150 are installed.

The housing 110 is installed in a main body of a computer (not shown) and includes a base plate 111 supporting the spindle motor 130 and the actuator 140, and a cover plate 112 coupled to an upper portion of the base plate 111 to enclosing and protecting the disk 120. The housing 110 is typically manufactured of stainless steel or aluminum.

At least one disk 120 is installed in the housing 110. In the past, two or more disks have been installed in a hard disk drive to increase the data storage capacity. However, as a surface recording density of a disk sharply increases recently, a single disk can contain a sufficient amount of data. Accordingly, hard disk drives having a single disk have recently been developed. Also, a data recording surface can be formed on both sides of the disk 120 or only one side thereof, for example, a lower surface thereof. In the following description, it is assumed that a data recording surface is formed on a lower surface of the disk 120 in a hard disk drive. However, the present invention is not limited to a case in which a single disk is provided. It is possible that the present invention can be applied to a case in which two or more disks are provided.

The spindle motor 130 rotates the disk 120 and is fixed to the base plate 111. A clamp 125 for preventing escape of the disk 120 is coupled to the upper end portion of the spindle motor 130.

The actuator 140 to record or reproduce data with respect to the disk 120 is installed on the base plate 111 capable of pivoting. The actuator 140 includes an arm 144 coupled to a pivot shaft 142, and a suspension 146 installed at one end portion of the arm 144 to support a slider 148 on which the magnetic head 149 is mounted to be elastically biased toward the surface of the disk 120. A flexible printed circuit board (FPCB) 164 and a preamplifier 162 to apply a current signal to the magnetic head 149 or amplify a reproduction signal from the magnetic head 149 are installed at the arm 144 of the actuator 140. Also, the FPCB 164 and the preamplifier 162 may be attached to the side surface of the arm 144. However, to lower the height of the actuator 140, the FPCB 164 and the preamplifier 162 can be installed on a lower surface of the arm 144, that is, on a surface facing the base plate 111, as shown in the drawings.

The actuator 140 pivots by a voice coil motor 150. The voice coil motor 150 includes a coil 158 coupled to the other end portion of the arm 144 of the actuator 140, upper and lower yokes 154 and 152 installed above and under the coil 158, respectively, and a magnet 156 attached to at least one of the upper and lower yokes 154 and 152.

A printed circuit board (PCB) 160 on which a plurality of chips such as an LSI (large scale integrated circuit) to drive and control constituent elements of the hard disk drive is installed on a lower surface of the base plate 111. Also, a through hole 170 into which a push-pin (not shown) used to control pivot of the actuator 140 when servo track information is recorded on a recording surface provided on a lower surface of the disk 120 is formed in the base plate 111. When the servo track information is recorded, the push-pin penetrates the through hole 170 from the bottom side of the base plate 111 to interfere with the arm 144 of the actuator 140.

After the servo track information is completely recorded on the recording surface of the disk 120, a hole cover 172 covering the through hole 170 is attached to the lower surface of the base plate 111. An electromagnetic wave of a predetermined frequency is generated by the LSI mounted on the PCB 160 and then transferred to the inside of the housing 110 via the through hole 170. Since the electromagnetic wave affects the magnetic head 149, the preamplifier 162, and the FPCB 164 installed on the actuator 140, it needs to be blocked.

In the present invention, the hole cover 172 is manufactured by a metal plate exhibiting an electric conductivity. Thus, eddy current can be generated in the hole over 172 made of a metal plate by the electromagnetic wave generated by the LSI mounted on the PCB 160. When a magnetic flux changes in a conductive body, an electromotive force is generated. The electromotive force makes current flow in eddy form in the conductive body and the current is referred to as eddy current. Heat is generated in the conductive body by the eddy current and the resistance of the conductive body so that loss of energy occurs, which is referred to as eddy current loss. Thus, the electromagnetic wave can be reduced or almost removed by the eddy current loss in the hole cover 172. As a result, the electromagnetic wave passing the hole cover 172 and reaching the magnetic head 149, the preamplifier 162, and the FPCB 164 in the housing 110 becomes very weak or is almost removed, so that the noise generated by the electromagnetic wave can be reduced.

To perform the above function, the hole cover 172 is preferably made of a metal plate exhibiting a superior electric conductivity and an appropriate resistance value, for example, an aluminum plate. Also, considering that the amount of the eddy current and the heat loss due to resistance, the thickness of the hole cover 172 is determined to a degree that the electromagnetic wave is sufficiently reduced.

Also, the hole cover 172 can perform a function to prevent the disk 120 and the magnetic head 149 from being contaminated by dust or moisture intruding from the outside to the inside of the housing 110 via the through hole 170.

The hole cover 172 has a size enough to completely cover the through hole 170. Also, the hole cover 172 can be directly attached to the bottom surface of the base plate 111 using a predetermined adhesive or an adhesive tape 174 covering the hole cover 172 as shown in the drawing.

Hereinafter, a noise reduction effect in a hard disk drive having the hole cover for blocking an electromagnetic wave according to the present invention will be described by comparing it with the conventional hard disk drive.

FIG. 4 is a graph showing the amplitudes of a reproduction signal and noise in the hard disk drive according to the present invention in comparison with those of the conventional technology.

Referring to the graph, in the conventional hard disk drive, relatively great noise is generated in a frequency area different from the frequency of the reproduction signal due to an electromagnetic wave generated by the PCB. In contrast, in the hard disk drive having a hole cover according to the present invention, it can be seen that noise due to the electromagnetic wave is hardly generated.

FIG. 5 is a graph showing a BER of a reproduction signal according to the position of the magnetic head in the hard disk drive according to the present invention in comparison with the conventional technology.

Referring to the graph, it can be seen that the entire BER in the present invention is relatively lower than that of the conventional invention. Since one of factors determining the BER is a ratio of noise to a reproduction signal, the BER is reduced as the ratio decreases. In particular, it can be see that the BER is definitely improved when the magnetic head, the preamplifier, and the FPCB are disposed in the middle portion of the disk closest to the through hole, that is, the magnetic head is disposed between the center portion and the edge portion of the disk.

As described above, in the hard disk drive according to the present invention, the electromagnetic wave generated by the PCB is reduced or removed by the eddy current loss at the hole cover made of a metal plate exhibiting electric conductivity. Thus, since the electromagnetic wave is prevented from reaching the magnetic head and preamplifier in the housing, noise due to the electromagnetic wave is reduced and quality of a reproduction signal is improved.

While this invention has been particularly shown and described with reference to preferred embodiments thereof, it will be understood by those skilled in the art that various changes in form and details may be made therein without departing from the spirit and scope of the invention as defined by the appended claims.

## Claims

1. A hard disk drive comprising:
a housing (110) having a base plate (111) and a cover plate (112);
a spindle motor (130) installed on the base plate (111);
a disk (120) installed on the spindle motor (130) to store data;
an actuator (146) having a magnetic head (149) to record or reproduce data with respect to the disk (120) and installed on the base plate (111) capable of pivoting by a voice coil motor; and
a printed circuit board (164) installed on a bottom surface of the base plate (111),
wherein a through hole (170) where servo track information is recorded on a recording surface of the disk (120) is formed in the base plate (111), and a hole cover (172) exhibiting an electric conductivity and covering the through hole (170) is attached to the bottom surface of the base plate (111) to block an electromagnetic wave generated by the printed circuit board (164) from being transferred to the inside of the housing (110).

2. The hard disk drive as claimed in claim 1, wherein eddy current is generated in the hole cover (172) by the electromagnetic wave generated by the printed circuit board (164), and the electromagnetic wave is reduced by energy loss due to the eddy current.

3. The hard disk drive as claimed in claim 1 or 2, wherein the hole cover (172) is made of an aluminum plate.

4. The hard disk drive as claimed in claim 1, 2 or 3, wherein the hole cover (172) is attached to the bottom surface of the base plate (111) using a predetermined adhesive.

5. The hard disk drive as claimed in claim 1, 2, 3 or 4, wherein the hole cover (172) is attached to the bottom surface of the base plate (111) using an adhesive tape covering the hole cover (172).
